# EUROPEAN PATENT APPLICATION

(11) **EP 1 860 806 A2**
(43) Date of publication of application: **28.11.2007**
(21) Application number: 07008801.8
(22) Date of filing: 30.04.2007
(51) Int. Cl.: H04H 7/00, H04H 1/00

(54) **System for digital broadcast and method for inserting advertisement data in a digital broadcast**

(30) Priority: 26.05.2006 KR 20060047537
(71) Applicant: Samsung Electronics Co., Ltd., Suwon-si Gyeonggi-do (KR)
(72) Inventor: Park, Jung-Hoon, Suwon-si Gyeonggi-do (KR); Park, Young-Sik, Suwon-si Gyeonggi-do (KR)
(74) Representative: Lang, Johannes

(57) **Abstract**

A digital broadcasting system includes a broadcasting station for transmitting digital broadcast data via a digital broadcasting network, the digital broadcasting data containing advertisement data, a digital broadcast receiver device for receiving the digital broadcast data in a digital broadcast reception mode and transmitting broadcast access information resulting from digital broadcast reception, and an advertisement server for receiving the broadcast access information from the digital broadcast receiver device and analyzing the broadcast access information, the advertisement server retrieving advertisement data corresponding to analysis result from pre-stored advertisement data and transmitting retrieved advertisement data to the broadcasting station. Advertisements are arranged in real time according to individual taste of digital broadcasting subscribers. This gives advertisers more benefit of the advertisements and presents subscribers with the pleasure of watching advertisements conforming to their taste.

## Description

### BACKGROUND OF THE INVENTION

### Field of the Invention:

The present invention relates to a digital broadcasting system. More particularly, the present invention relates to a digital broadcasting system capable of arranging advertisements in real time according to a user's taste and a method for providing digital broadcasts using the same.

### Description of the Related Art:

As generally known in the art, digital broadcasting services have been developed to replace conventional analog broadcasting services and provide users with better broadcasts in terms of audio and video quality. Digital broadcasting services are classified into satellite and terrestrial digital broadcasting services.

The satellite digital broadcasting services, which aim to provide mobile services, enable users to watch multi-channel multimedia broadcasts via portable receivers, for example, mobile telephones, personal information terminals, or vehicular receivers regardless of place and time.

The terrestrial digital broadcasting services, which are based on Digital Audio Broadcasting (DAB), enable users on the move to receive multimedia broadcasts through VHF channel no. 12, which is currently out of service. For example, the terrestrial digital broadcasting services provide a combination of television, radio, and data broadcasting services through a multi-channel.

In line with recent developments in digital broadcasting and mobile communication technologies, much attention is paid to digital broadcasting services for enabling subscribers to watch digital broadcasts even on the move. Particularly, Digital Multimedia Broadcasting (DMB) services using mobile communication terminals are in the highlight.

Meanwhile, advertisement data is inserted into digital broadcasts and advertises products or events. However, advertisements inserted into digital broadcasts are hardly different from conventional advertisements, which are unilaterally transmitted to the public via broadcasting media or printed media.

For example, broadcast providers insert advertisement data into broadcasts of their own accord.

However, this practice is contrary to the current trends towards emphasis on individual taste or personality, not standardization. Therefore, real-time arrangement of advertisements based on individual taste or preference of broadcast subscribers would give advertisers more benefit of the advertisements and present subscribers with the pleasure of watching advertisements conforming to their taste.

### SUMMARY OF THE INVENTION

Accordingly, the present invention has been made to address the above-mentioned problems, and an object of the present invention is to provide a digital broadcasting system capable of arranging advertisements in real time according to a user's taste and a method for providing digital broadcasts using the same.

In order to accomplish this object, a digital broadcasting system including a broadcasting station for transmitting digital broadcast data via a digital broadcasting network is provided. The digital broadcasting data includes advertisement data, a digital broadcast receiver device for receiving the digital broadcast data in a digital broadcast reception mode and transmitting broadcast access information resulting from digital broadcast reception, and an advertisement server for receiving the broadcast access information from the digital broadcast receiver device and analyzing the broadcast access information, the advertisement server retrieving advertisement data corresponding to analysis result from pre-stored advertisement data and transmitting retrieved advertisement data to the broadcasting station.

Another aspect of the present invention is to provide a method for providing a digital broadcast by a digital broadcasting system. The method includes transmitting broadcast access information to an advertisement server by a digital broadcast receiver device, the broadcast access information resulting from digital broadcast reception in a digital broadcast reception mode, the advertisement server arranging advertisement data inserted into the digital broadcast. The broadcast access information is analyzed. Advertisement data corresponding to analysis result from pre-stored advertisement data are retrieved. Retrieved advertisement data are transmitted to a broadcasting station by the advertisement server. Advertisement data are inserted into digital broadcast data. The advertisement data are transmitted by the advertisement server. The digital broadcast data are transmitted via a broadcasting channel by the broadcasting station. The digital broadcast receiver device are connected to the broadcasting channel.

### BRIEF DESCRIPTION OF THE DRAWINGS

The above and other objects, features, and advantages of the present invention will be more apparent from the following detailed description taken in conjunction with the accompanying drawings, in which:
FIG. 1 is a diagram illustrating a digital broadcasting system according to an exemplary embodiment of the present invention;
FIG. 2 is a block diagram illustrating an advertisement server included in a digital broadcasting system according to an exemplary embodiment of the present invention;
FIG. 3 is a table illustrating an example of a condition table used to select advertisement data by an advertisement server according to an exemplary embodiment of the present invention;
FIG. 4 is a block diagram illustrating a digital broadcast receiver device included in a digital broadcasting system according to an exemplary embodiment of the present invention; and
FIG. 5 is a flowchart illustrating a method for providing digital broadcasts by using a digital broadcasting system according to an exemplary embodiment of the present invention.

Throughout the drawings, like reference numerals will be understood to refer to like parts, components and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

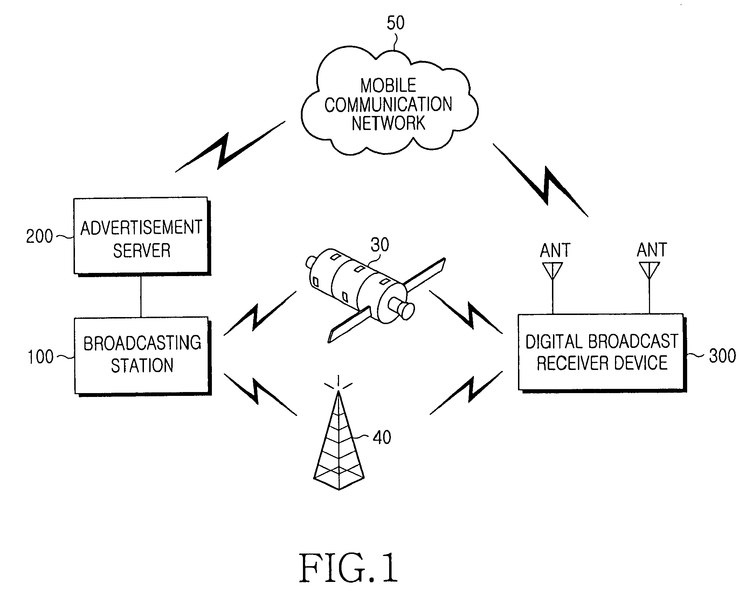

FIG. 1 is a diagram illustrating a digital broadcasting system according to an exemplary embodiment of the present invention.

As shown, the digital broadcasting system includes a broadcasting station 100 for creating digital broadcast data from multimedia data, inserting advertisement data into the digital broadcast data, and emitting the digital broadcast data via a digital broadcasting network, an advertisement server 200 for providing the broadcasting station 100 with the advertisement data, and a digital broadcast receiver device 300 for receiving the digital broadcast data and outputting it. The broadcasting station 100 may incorporate the advertisement server 200.

The broadcasting station 100 inserts the advertisement data, which is provided by the advertisement server 200, into the digital broadcast data and transmits it to the digital broadcast receiver device 300 via the digital broadcasting network. When transmitted by the broadcasting station 100, the digital broadcast data reaches the digital broadcast receiver device 300 via a satellite 30 or a terrestrial repeater 40.

The advertisement server 200 stores a condition table for selecting advertisement data to be provided to the broadcasting station 100 and various pieces of advertisement data, which satisfy the condition table.

Upon receiving broadcast access information from the digital broadcast receiver device 300, the advertisement server 200 analyzes the information. Then, the advertisement server 200 retrieves advertisement data, which corresponds to the result of analysis, and provides the broadcasting station 100 with the retrieved advertisement data.

Although the advertisement server 200 uses the broadcast access information to select advertisement data conforming to each user's taste in an exemplary embodiment of the present invention, the information may also be used to investigate the user's favorite channels, access time, ratings, and the like.

According to an exemplary embodiment of the present embodiment, the broadcast access information contains the digital broadcast subscriber's gender and age, information regarding the currently-accessed channel, and broadcast access time. The information regarding the currently-accessed channel may contain the channel number and channel type, such as soap opera, music, or sports.

The digital broadcast receiver device 300 receives digital broadcast data from the broadcasting station 100 via a desired broadcasting channel in a digital broadcast reception mode and outputs the data. The digital broadcast receiver device 300 transmits broadcast access information, which results from the digital broadcast reception, to the advertisement server 200 via the mobile communication network 50. In an exemplary implementation, the digital broadcast receiver device 300 transmits the broadcast access information in a Short Message Service (SMS) mode or Enhanced Messaging Service (EMS) mode.

The mobile communication network 50 may be a Code Division Multiple Access (CDMA) network, a Universal Mobile Telecommunications System (UMTS) network, or a Global System for Mobile Communication (GSM) network. The mobile communication network 50 has a number of Exchangers (EXs) (not shown) for switching speech paths, a number of Base Station Controllers (BSCs) coupled to respective EXs, and a number of Base Stations (BSs) coupled to respective BSCs.

Respective BSs are coupled to a number of Mobile Stations (MSs) via a sky wave transmission network in a TDMA or CDMA mode so that packet data, such as SMS or EMS messages, can be transmitted. Respective EXs are coupled to a Public Switched Telephone Network (PSTN), Integrated Services Digital Network (ISDN), or other type of mobile communication network via gateways. In addition, the EXs may be coupled to Internet via Inter-Working Function (IWF) and Wireless Application Protocol (WAP) gateways.

The digital broadcasting system may additionally include a message server (not shown) for receiving broadcast access information from the digital broadcast receiver device 300 as a short message and forwarding it to the advertisement server 200. Preferably, the message server forwards the broadcast access information to the advertisement server 200 in a Transmission Control Protocol/User Datagram Protocol (TCP/UDP) mode.

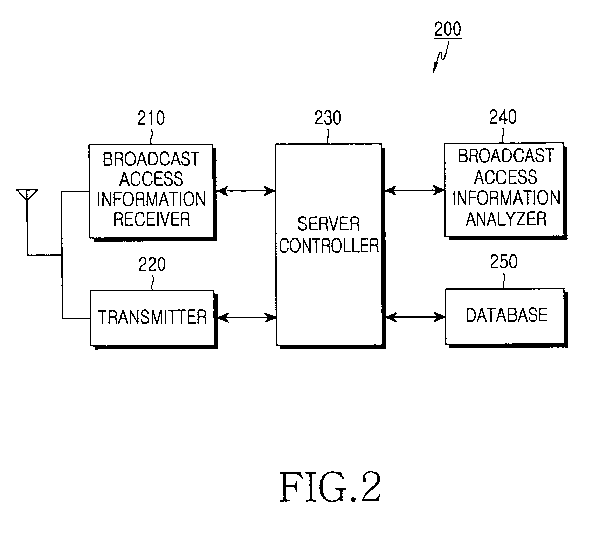

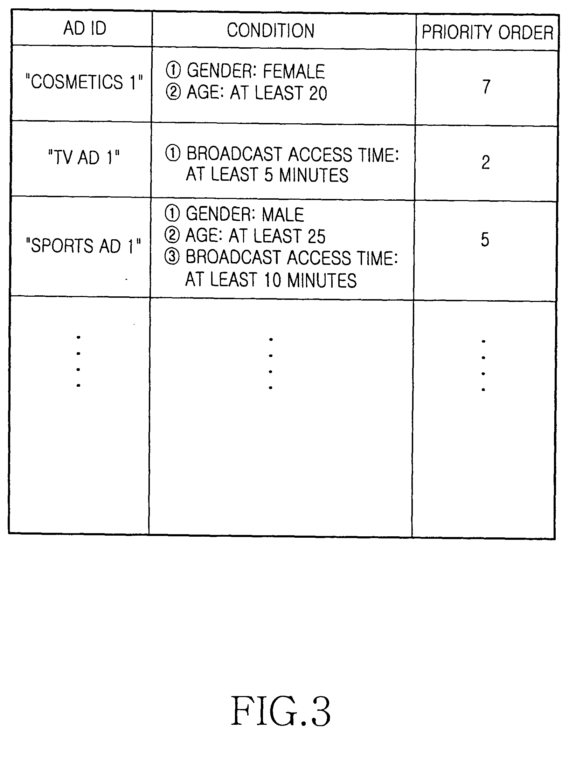

FIG. 2 is a block diagram illustrating an advertisement server according to an exemplary embodiment of the present invention, and FIG. 3 is a table illustrating an exemplary condition table used to select advertisement data by the advertisement server.

As shown, the advertisement server 200 includes a broadcast access information receiver 210, a transmitter 220, a server controller 230, a broadcast access information analyzer 240, and a database 250.

Referring to FIGs. 1 and 2, the broadcast access information receiver 210 receives broadcast access information from the digital broadcast receiver device 300 as a short message. The broadcast access information contains the digital broadcast subscriber's gender and age, information regarding the currently-accessed channel, and broadcast access time.

After being received, the broadcast access information is analyzed by the broadcast access information analyzer 240 under the control of the server controller 230, which may incorporate the broadcast access information analyzer 240.

The server controller 230 controls the overall operation of the advertisement server 200 according to an exemplary embodiment of the present invention. The server controller 230 retrieves advertisement data, which satisfies conditions of the condition table stored in the database 250, based on the result of broadcast access analysis done by the broadcast access information analyzer 240. The retrieved advertisement data is transmitted to the broadcasting station 100 via the transmitter 220.

When a number of pieces of advertisement data have been retrieved, the server controller 230 may either transmit all of them to the broadcasting station 100 or transmit one of them, which has top priority.

The database 250 stores a condition table for selecting advertisement data to be provided to the broadcasting station 100 and various pieces of advertisement data, which satisfy the condition table.

An exemplary condition table will now be described with reference to FIG. 3.

The condition table contains ID, condition, and priority order items regarding advertisement data. The priority order item is used, when a number of pieces of advertisement data satisfy the condition, to select one of them to be transmitted to the broadcasting station 100.

It is assumed that, as a result of analysis of broadcast access information received by the broadcast information receiver 210, a subscriber is female and 21 years old. Then, the server controller 230 retrieves the ID, such as "cosmetics 1", of advertisement data, which satisfies the condition, for example, gender: female, age: at least 20, of the condition table. The server controller 230 reads advertisement data, which corresponds to the retrieved ID, from the database 250 and provides the broadcasting station 100 with it.

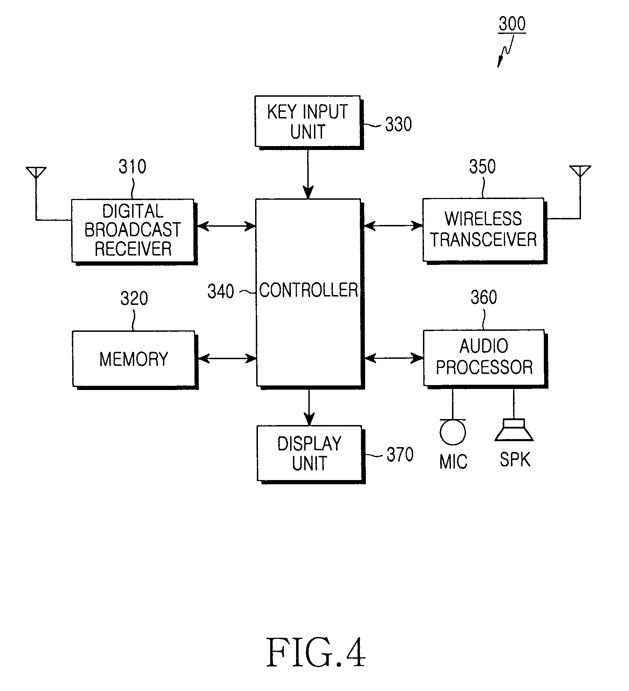

FIG. 4 is a block diagram illustrating a digital broadcast receiver device according to an exemplary embodiment of the present invention.

As shown, the digital broadcast receiver device 300 includes a digital broadcast receiver 310, a memory 320, a key input unit 330, a controller 340, a wireless transceiver 350, an audio processor 360, and a display unit 370.

The digital broadcast receiver 310 receives digital broadcast frames under the control of the controller 340, demodulates them, and outputs the demodulated digital broadcast frames to the controller 340.

The digital broadcast receiver 310 may have a demodulator (not shown) for demodulating the received digital broadcast frames into digital data streams.

The memory 320 stores various pieces of information necessary for controlling the operation of the digital broadcast receiver device 300 according to an exemplary embodiment of the present invention. The memory 320 pre-stores the address of the advertisement server 200, to which broadcast access information resulting from digital broadcasting reception is to be transmitted, and stores the broadcast access information.

The key input unit 330 receives operation signals from the user, which result from key input or voice input, for example, and sends the signals to the controller 340.

The controller 340 controls the overall operation of the digital broadcast receiver device 300 according to an exemplary embodiment of the present invention. The controller 340 decodes the digital broadcast streams, which have been demodulated and outputted by the digital broadcast receiver 310, and outputs the decoded streams to the audio processor 360 and the display unit 370 via a video signal processor (not shown) and an audio signal processor (not shown).

When the user makes a request for receiving digital broadcasts, the controller 340 switches the operation mode of the digital broadcast receiver device 300 to a digital broadcast reception mode and receives digital broadcast data via a desired broadcasting channel. The digital broadcast data contains advertisement data inserted into each broadcast.

The controller 340 stores broadcast access information, for example, the digital broadcast subscriber's gender and age, information regarding the currently-accessed channel, and broadcast access time, which results from digital broadcast reception in the digital broadcast reception mode, in the memory 320.

The control unit 340 transmits the stored broadcast access information to the advertisement server 200 via the wireless transceiver 350 at a predetermined interval. The interval may be preset for the digital broadcast receiver device 300. Alternatively, the user may set the interval on a minute or hour basis. The control unit 340 may control the transmission process in such a manner that transmission to the advertisement server 200 does not begin until the amount of data of the stored broadcast access information reaches a predetermined level.

In an exemplary implementation, the controller 340 transmits the broadcast access information to the advertisement server 200 in a short message mode.

The wireless transceiver 350 transmits/receives audio data, text data, video data, and control data under the control of the controller 340. To this end, the wireless transceiver 350 has an RF transmitter (not shown) for upgrading the frequency of transmitted signals and amplifying them and an RF receiver (not shown) for amplifying received signals with little noise and downgrading their frequency. The wireless transceiver 350 may have a modem (not shown) including a transmitter for encoding and modulating transmitted signals and a receiver for demodulating and decoding received signals.

The audio processor 360 modulates electric signals, which have been inputted from a microphone, into audio data. In addition, the audio processor 360 demodulates audio data, which has been encoded by and inputted from the wireless transceiver 360, into electric signals and outputs them to a speaker. The audio processor 360 may include a data codec for processing packet data, for example, and an audio codec for processing audio signals, such as voice. The controller 340 may incorporate the audio processor 360.

The display unit 370 outputs various display data created by the digital broadcast receiver device 300. Preferably, the display unit 370 is composed of an LCD capable to sufficiently supporting the resolution of digital broadcast data. When a touch screen type LCD is used, the display unit 370 may also be used as an input unit.

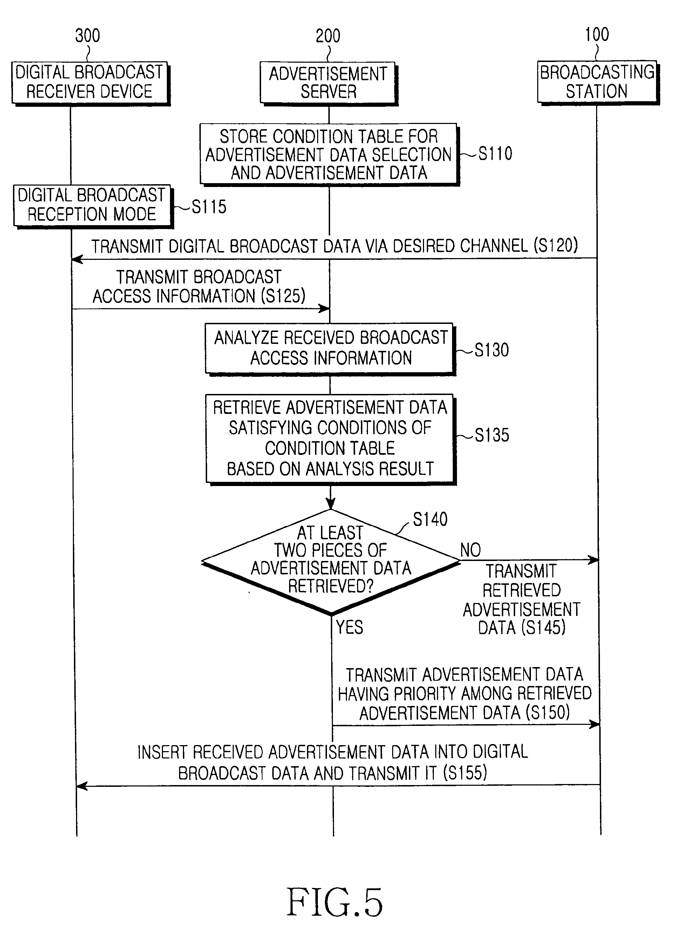

FIG. 5 is a flowchart illustrating a method for providing digital broadcasts by using a digital broadcasting system according to an exemplary embodiment of the present invention.

Referring to FIGs. 1 and 5, the advertisement server 200 stores a condition table for selecting advertisement data to be provided to the broadcasting station 100 and various pieces of advertisement data satisfying conditions of the condition table at step S 110.

The digital broadcast receiver device 300 enters into a digital broadcast reception mode in response to the user's request for receiving digital broadcasts at step S 115.

The broadcasting station 100 transmits digital broadcast data to the digital broadcast receiver device 300 via a broadcasting channel as requested by the user of the digital broadcast receiver device 300 at step S120.

The digital broadcast receiver device 300 receives the digital broadcast data, outputs it, and transmits broadcast access information resulting from digital broadcast reception to the advertisement server 200 at step S125. The digital broadcast receiver device 300 stores the broadcast access information and transmits it at a predetermined interval. Alternatively, the digital broadcast receiver device 300 transmits the broadcast access information when the amount of data of the broadcast access information reaches a predetermined level.

Upon receiving the broadcast access information from the digital broadcast receiver device 300, the advertisement server 200 analyzes it at step S 130.

The advertisement server 200 compares the result of analysis of the broadcast access information, for example, the broadcast subscriber's gender and age, information regarding the currently-accessed channel, and broadcast access time, with a pre-stored condition table and retrieves advertisement data satisfying conditions of the condition table at step S135.

Assuming that, as a result of analysis of the broadcast access information, a subscriber is female and 21 years old, the advertisement server 200 retrieves the ID, such as "cosmetics 1", of advertisement data, which satisfies the condition, such as gender: female, age: at least 20, of the condition table.

The advertisement server 200 checks if at least two pieces of advertisement data have been retrieved at step S140.

When one piece of advertisement data has been retrieved, the advertisement server 200 transmits the retrieved advertisement data to the broadcasting station 100 at step S145.

When two or more pieces of advertisement data have been retrieved in the checking step, the advertisement server 200 selects one of them, which has top priority, with reference to the condition table and transmits the selected advertisement data to the broadcasting station 100 at step S150.

In addition, when a number of pieces of advertisement data have been retrieved, the advertisement server 200 may transmit all of them to the broadcasting station 100 regardless of their priority order, if necessary.

Upon receiving advertisement data from the advertisement server 200, the broadcasting station 100 inserts the advertisement data into digital broadcast data, which is transmitted via a broadcasting channel to which the digital broadcast receiver device 300 is connected at step S155.

Consequently, the user of the digital broadcast receiver device 300 can watch advertisements, which are arranged in real time according to his broadcast access information, together with digital broadcasts via a selected broadcasting channel.

As mentioned above, certain exemplary embodiment of the present invention is advantageous in that advertisements are arranged in real time according to individual taste of digital broadcasting subscribers. This gives advertisers more benefit of the advertisements and presents subscribers with the pleasure of watching advertisements conforming to their taste.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A digital broadcasting system comprising:
a broadcasting station for transmitting digital broadcast data via a digital broadcasting network, the digital broadcasting data containing advertisement data;
a digital broadcast receiver device for receiving the digital broadcast data in a digital broadcast reception mode and transmitting broadcast access information resulting from digital broadcast reception; and
an advertisement server for receiving the broadcast access information from the digital broadcast receiver device and analyzing the broadcast access information, the advertisement server retrieving advertisement data corresponding to analysis result from pre-stored advertisement data and
transmitting retrieved advertisement data to the broadcasting station.

2. The system as claimed in claim 1, wherein the broadcast access information comprises a digital broadcast subscriber's gender and age, information regarding a currently-accessed digital broadcasting channel, and broadcast access time.

3. The system as claimed in claim 1, wherein the digital broadcast receiver device stores the broadcast access information and transmits stored broadcast access information to the advertisement server at a predetermined interval.

4. The system as claimed in claim 1, wherein the digital broadcast receiver device stores the broadcast access information and transmits stored digital broadcast receiver to the advertisement server when data amount of the stored broadcast access information reaches a predetermined level.

5. The system as claimed in claim 1, wherein the digital broadcast receiver device transmits the broadcast access information to the advertisement server in a Short Messaging Service (SMS) mode.

6. The system as claimed in claim 1, further comprising a message server for receiving broadcast access information from the digital broadcast receiver device as a short message and forwarding received broadcast access information to the advertisement server.

7. The system as claimed in claim 6, wherein the message server forwards the received broadcast access information to the advertisement server in a Transmission Control Protocol/User Datagram Protocol (TCP/UDP) mode.

8. The system as claimed in claim 1, wherein the advertisement server pre-stores a condition table for selecting advertisement data corresponding to a result of analysis of the broadcast access information and advertisement data conforming to a condition of the condition table.

9. The system as claimed in claim 8, wherein the advertisement server retrieves advertisement data satisfying the condition of the condition table based on the result of analysis of the broadcast access information and transmits retrieved advertisement data to the broadcasting station.

10. The system as claimed in claim 9, wherein, when a number of pieces of advertisement data have been retrieved, advertisement data with top priority is transmitted to the broadcasting station by the advertisement server.

11. The system as claimed in claim 1, wherein the broadcasting station inserts advertisement data received from the advertisement server into digital broadcast data, and transmits the digital broadcast data via a broadcasting channel.

12. The system as claimed in claim 9, wherein the broadcasting station inserts advertisement data received from the advertisement server into digital broadcast data, and transmits the digital broadcast data via a broadcasting channel.

13. The system as claimed in claim 1, wherein the advertisement server comprises:
a database for storing a condition table for selecting advertisement data based on broadcast access information and advertisement data conforming to a condition of the condition table;
a broadcast access information receiver for receiving broadcast access information from the digital broadcast receiver device;
a broadcast access information analyzer for analyzing received broadcast access information;
a server controller for retrieving advertisement data satisfying the condition of the condition table based on a result of analysis of the broadcast access information; and
a transmitter for transmitting retrieved advertisement data to the broadcasting station under control of the server controller.

14. A method for providing a digital broadcast by a digital broadcasting system, the method comprising the steps of:
(a) transmitting broadcast access information to an advertisement server by a digital broadcast receiver device, the broadcast access information resulting from digital broadcast reception in a digital broadcast reception mode, the advertisement server arranging advertisement data inserted into the digital broadcast;
(b) analyzing the broadcast access information, retrieving advertisement data corresponding to analysis result from pre-stored advertisement data, and transmitting retrieved advertisement data to a broadcasting station by the advertisement server; and
(c) inserting advertisement data into digital broadcast data, the advertisement data being transmitted by the advertisement server, and transmitting the digital broadcast data via a broadcasting channel by the broadcasting station, the digital broadcast receiver device being connected to the broadcasting channel.

15. The method as claimed in claim 14, wherein the broadcast access information comprises a digital broadcast subscriber's gender and age, information regarding a currently-accessed digital broadcasting channel, and broadcast access time.

16. The method as claimed in claim 14, wherein the step of (a) transmitting comprises the steps of:
storing the broadcast access information in the digital broadcast reception mode and
transmitting stored broadcast access information to the advertisement server at a predetermined interval.

17. The method as claimed in claim 16, wherein, in the step of transmitting stored broadcast access information, the stored broadcast access information is transmitted to the advertisement server when data amount of the stored broadcast access information reaches a predetermined level.

18. The method as claimed in claim 14, wherein the broadcast access information is transmitted to the advertisement server in a Short Messaging Service (SMS) mode.

19. The method as claimed in claim 14, wherein the step of (b) analyzing comprises the steps of:
pre-storing a condition table and advertisement data, the condition table being used to select advertisement data based on broadcast access information;
analyzing broadcast access information received from the digital broadcast receiver device and retrieving advertisement data satisfying a condition of the condition table based on analysis result and
transmitting retrieved advertisement data to the broadcasting station.

20. The method as claimed in claim 20, wherein, in the step of transmitting retrieved advertisement data, advertisement data with top priority is transmitted to the broadcasting station when a number of pieces of advertisement data have been retrieved.
